# EUROPÄISCHE PATENTANMELDUNG

(11) **EP 2 660 030 A1**
(43) Veröffentlichungstag der Anmeldung: **06.11.2013**
(21) Anmeldenummer: 12003417.8
(22) Anmeldetag: 03.05.2012
(51) Int. Cl.: B29C 37/02, B24B 9/20, B24B 21/00, B24B 39/00, B23D 67/00

(54) **Glätten eines Kunststoffspritzgussteils**

(71) Anmelder: Franz Oberflächentechnik GmbH & Co. KG, 82538 Geretsried (DE)
(72) Erfinder: Franz, Wolf-Dieter, 82538 Geretsried (DE)
(74) Vertreter: Szynka, Dirk

(57) **Zusammenfassung**

Die Erfindung betrifft ein Verfahren zum automatisierten Glätten einer Oberfläche eines Kunststoffspritzgussteils (1) mit Hilfe einer Glättfläche (4), wobei Spritzgussteil (1) und Glättfläche (4) in Kontaktlage gegeneinander verschoben werden, und zwar mit einer Relativgeschwindigkeit von höchstens 1 m/s.

## Beschreibung

Die vorliegende Erfindung betrifft ein Verfahren zum automatisierten Glätten einer Oberfläche eines Kunststoffspritzgussteils.

Ein solches Kunststoftspritzgussteil, im Folgenden der Einfachheit halber Spritzgussteil genannt, kann beispielsweise den Grundkörper für ein Bauteil mit Sichtfläche bilden, das etwa als dekoratives Element im Fahrzeuginnenraum vorgesehen wird. Bei der Herstellung eines Spritzgussteils wird einer von Formwerkzeugen begrenzten Kavität fließfähiges Kunststoffmaterial zugeführt, welches vor dem Entformen zumindest teilweise aushärtet. Wo die Formwerkzeuge aneinandergrenzen, kann es dabei zur Ausbildung eines Grats an der Oberfläche des Spritzgussteils kommen, etwa wenn die Formwerkzeuge leicht zueinander versetzt sind oder abgerundete Kanten haben.

Der vorliegenden Erfindung liegt die Aufgabe zugrunde, ein vorteilhaftes Verfahren zum automatisierten Glätten einer Oberfläche eines Kunststoffspritzgussteils anzugeben. Wenngleich nämlich z. B. versucht wird, Grate nicht an Sichtflächen zu legen, ist dies nicht immer möglich.

Erfindungsgemäß wird dieses Problem gelöst durch ein Verfahren mit den Schritten:
- Vorsehen eines Werkzeugs mit einer ersten Glättfläche;
- Halten des Kunststoffspritzgussteils mit einem Haltewerkzeug;
- in Kontakt Bringen von erster Glättfläche und Kunststoffspritzgussteil;
- in Kontaktlage gegeneinander Verschieben von erster Glättfläche und Kunststoffspritzgussteil, und zwar mit einer Relativgeschwindigkeit von höchstens 1 m/s;
- Aufheben des Kontakts zwischen erster Glättfläche und Kunststoffspritzgussteil.

Eine Grundidee der Erfindung besteht also darin, die Geschwindigkeit der zwischen Glättfläche und Spritzgussteil in Kontaktlage erfolgenden Relativverschiebung zu begrenzen, und zwar auf höchstens 1 m/s, in dieser Reihenfolge zunehmend bevorzugt höchstens 0,9 m/s, 0,8 m/s, 0,7 m/s, 0,6 m/s, 0,5 m/s.

Die Erfinder haben nämlich festgestellt, dass es bei einer höheren Relativgeschwindigkeit zwischen einer rauen Glättfläche und einem Kunststoffspritzgussteil zu einer übermäßigen Erwärmung im Kontaktbereich kommen kann. So wurden etwa bei ersten, mit einer Bandschleifmaschine - die Bandgeschwindigkeit einer solchen liegt üblicherweise bei mehr als 10 m/s - durchgeführten Versuchen zur Oberflächenglättung Aufschmelzungsausbrüche" an der Oberfläche des Kunststoffspritzgussteils beobachtet, also lokal aufgrund der Überhitzung ausgetretenes und dann wieder erstarrtes Kunststoffmaterial.

Solche Aufschmelzungsausbrüche mit einer Länge von beispielsweise um die 50 µm stellen etwa bei dekorativen Anwendungen eine besonders störende Oberflächenverunreinigung dar. Durch die erfindungsgemäß reduzierte Relativgeschwindigkeit kann vorteilhafterweise die Gefahr eines lokalen Überhitzens zumindest reduziert werden, was zu weniger Aufschmelzungsausbrüchen (idealerweise keinen) und damit zu glatteren Oberflächen führt.

Als "Glättfläche" wird ganz allgemein eine zum Abtragen von Kunststoffmaterial geeignete Werkzeugoberfläche bezeichnet, beispielsweise eine Oberfläche gewisser Rauigkeit, die zumindest punktuell härter als der zu glättende Kunststoff ist. So sind etwa in ein Harz eingebettete Schleifpartikel eines Schleifpapiers härter als das Kunststoffmaterial; allgemeiner gesprochen kann als Glättfläche also beispielsweise eine geometrisch unbestimmte Schneide (z. B. die statistisch verteilten Kanten von Schleifpartikeln) vorgesehen sein. Es ist auch eine gegenüber dem Kunststoff generell härtere Oberfläche, etwa aus Metall, mit beispielsweise periodischen Einkerbungen denkbar, etwa auch eine Glättfläche mit geometrisch bestimmter, also dem Werkzeug gezielt an einer Stelle vorgegebener Schneide, wie sie beispielsweise auch manche Feilen zeigen. Bevorzugt ist gleichwohl eine Glättfläche mit Schleifpartikeln.

Das in Kontaktlage gegeneinander Verschieben von erster Glättfläche und Spritzgussteil, also die Relativbewegung (Glättfläche oder Spritzgussteil oder beide können bewegt werden) mit tangentialer bzw. entlang der Oberfläche orientierter Richtungskomponente, wird im Folgenden der Einfachheit halber als "Glättbewegung" bezeichnet.

Bevorzugte Ausgestaltungen sind in den abhängigen Ansprüchen und in der folgenden Beschreibung angegeben, wobei die einzelnen Merkmale auch in anderer Kombination erfindungswesentlich sein können und sich die Beschreibung stets sowohl auf das Verfahren als auch ein damit behandeltes Bauteil bezieht.

Gemäß einer ersten Ausführungsform wird nach dem Aufheben des Kontakts zwischen erster Glättfläche und Spritzgussteil eine neue Glättfläche für ein nachfolgend zu bearbeitendes Spritzgussteil zur Verfügung gestellt und/oder die erste Glattfläche abgeblasen. Wenngleich die verringerte Relativgeschwindigkeit die Gefahr eines Aufschmelzens der Spritzgussteiloberfläche verringert, wird und soll bei der Relativbewegung dennoch Oberflächenmaterial abgetragen werden, eben beispielsweise zur Glättung eines Grats.

Das Glätten eines ersten Spritzgussteils kann also abgetragenes Kunststoffmaterial auf der Glättfläche hinterlassen, welches anderenfalls, wenn für das nächste Spritzgussteil dieselbe Glättfläche verwendet würde, jedenfalls teilweise auf diesem abgelagert werden könnte; es käme zu einer Kreuzkontamination. Wird die Glättbewegung reduzierter Geschwindigkeit mit dem Bereitstellen einer neuen Glättfläche für ein neues Bauteil kombiniert, können vorteilhafterweise besonders saubere Oberflächen erzielt werden, an denen sich idealerweise weder Aufschmelzungsausbrüche noch Verunreinigungen durch von vorhergehenden Spritzgussteilen abgetragenes Kunststoffmaterial finden.

Dies kann beispielsweise auch erreicht werden, wenn die erste Glättfläche nach dem Glätten abgeblasen, also etwa Druckluft gereinigt wird; vorzugsweise wird nach dem Glätten mit Druckluft gereinigt und wird die erste Glattfläche dann später (vergleiche "Endlosband") erneut zum Glätten verwendet. Dementsprechend meint "neue Glättfläche" also jedenfalls nicht zum Glätten des vorhergehenden Spritzgussteils verwendet bzw. für in dieser Reihenfolge zunehmend bevorzugt mindestens 10, 20, 30, 40, 50 vorhergehende (unmittelbar aufeinanderfolgend bearbeitete) Spritzgussteile nicht verwendet; vorzugsweise wird die "neue Glättfläche" insgesamt nur in dieser Reihenfolge zunehmend bevorzugt höchstens 1000-, 500-, 300-, 200-, 100-, 50-mal verwendet.

Bei größeren Spritzgussteilen mit beispielsweise einer Mehrzahl Grate aber beispielsweise auch im Falle eines besonders ausgeprägten Grates können selbstverständlich auch für ein einziges Spritzgussteil mehrere, jeweils neue Glättflächen vorgesehen sein (und kann für das nächste Bauteil eine weitere neue Glättfläche zur Verfügung gestellt werden).

Vorzugsweise erfolgt die Glättbewegung, indem das Spritzgussteil an der Glattfläche entlang bewegt wird, die dabei ihrerseits zumindest zeitweise, vorzugsweise während der gesamten Glättbewegung, selbst nicht bewegt wird. Bei der Glättbewegung wird also vorzugsweise das Spritzgussteil an der währenddessen ruhenden Glättfläche entlanggeführt.

Etwa in Verbindung mit dem vorstehend beschriebenen Ansatz, die Glättfläche von Spritzgussteil zu Spritzgussteil zu erneuern, kann eine Minimierung der Glättfläche von Interesse sein, und zwar wegen einer Verringerung des Materialaufwands und damit der Kosten. Deshalb ist eine Ausgestaltung bevorzugt, bei welcher die Glättfläche gekrümmt ist und das gegeneinander Verschieben bei einem Kontakt im Bereich der Krümmung erfolgt, und zwar mit einer tangential zu der gekrümmten Glättfläche orientierten Richtungskomponente. Der benutzte Glättflächenbereich lässt sich somit in idealisierter Betrachtung auf den Berührungspunkt von Krümmungslinie und Tangente begrenzen und kann auch in der praktischen Umsetzung im Vergleich zu einer plan ausgebildeten Glattfläche verringert werden, insbesondere wenn sich der zu entfernende Grat näherungsweise entlang einer Geraden erstreckt.

In bevorzugter Ausgestaltung wird das Spritzgussteil nach einer ersten Bewegung entlang der zumindest zeitweise selbst nicht bewegten ersten Glättfläche erneut entlang einer zumindest zeitweise selbst nicht bewegten Glättfläche bewegt, wird die Glättbewegung also wiederholt. Dabei hat sich eine in einer der ersten Glättbewegung entgegengesetzten Richtung erfolgende zweite Glättbewegung als vorteilhaft erwiesen, weil dies einerseits schon "Blindbewegungen" eines Haltewerkzeugs vermeiden und so etwa die Bearbeitungsdauer reduzieren hilft. Andererseits können gegebenenfalls auch mit der ersten Glättbewegung in eine Richtung gestreifte Kunststoffpartikel besser abgehoben werden.

Generell können je nach Gratstärke auch mehr als zwei Glättbewegungen vorgenommen werden, etwa aufeinanderfolgend in jeweils entgegengesetzter Richtung, also mindestens 3, 4, 5, oder 6 Glättbewegungen. Dabei kann prinzipiell auch zwischen zwei am selben Spritzgussteil vorgenommenen Glättbewegungen die Glättfläche erneuert werden; vorzugsweise erfolgt ein Austausch der Glättfläche jedoch immer zwischen zwei Spritzgussteilen.

Hinsichtlich des Austauschs der Glättflächen hat es sich als besonders vorteilhaft erwiesen, wenn diese auf einem gemeinsamen Band vorgesehen sind und das Bereitstellen der weiteren Glättfläche durch eine Bandbewegung erfolgt, und zwar vorzugsweise nachdem der Kontakt zwischen erster Glättfläche und Spritzgussteil aufgehoben ist. Ein Vorteil hiervon ist, auch in Kostenhinsicht, dass beispielsweise auch ein kommerziell erhältliches Schleifband als Glättfläche verwendet werden kann.

Gleichermaßen kann auch die Bandbewegung mittels einer jedenfalls hinsichtlich des prinzipiellen Aufbaus einer Bandschleifmaschine ähnlichen Vorrichtung umgesetzt werden, was etwa aufgrund der Verwendbarkeit gängiger Bauteile vorteilhaft sein kann. Ein Unterschied ergibt sich selbstverständlich zumindest in der Ansteuerung eines das Band transportierenden Motors (oder eines Getriebes), weil das Band vorliegend vorzugsweise immer nur stückweise weiterbewegt wird, beispielsweise auf die Bandlänge bezogen um nur einen Bruchteil davon, etwa weniger als 10 %, 5 %, 1 %. Besonders bevorzugt wird das Band immer dann weiterbewegt, wenn kein Kontakt zum Spritzgussteil besteht.

Vorzugsweise sind die Glättflächen auf einem etwa über Rollen umgelenkten Endlosband vorgesehen, wobei besonders bevorzugt eine die Glättflächen in der Reihenfolge ihrer Bereitstellung verbindende Linie auf dem Endlosband eine Art Schraubenform beschreibt. Die Steuerung von Endlosband und das Spritzgussteil führendem Haltewerkzeug erfolgt also etwa derart, dass die Glättflächen auf dem Endlosband in dessen Längsrichtung aufeinanderfolgend angeordnet sind und nach einer vollständigen Bandumdrehung ein Versatz in Breitenrichtung des Bandes erfolgt, beispielsweise indem das Haltewerkzeug die folgenden Spritzgussteile so mit dem Endlosband in Kontakt bringt, dass eine weitere Reihe Glättflächen neben der ersten angeordnet wird.

In bevorzugter Ausgestaltung wird mit dem erfindungsgemäßen Verfahren ein sich entlang der Oberfläche des Kunststoffspritzgussteils erstreckender Grat geglättet und schließt die Erstreckungsrichtung des Grats mit der Richtung der Glättbewegung einen Winkel von höchstens 45° ein, besonders bevorzugt höchstens 20°; idealerweise liegt sie parallel dazu. Die Orientierung von Grat und Glättbewegung ist also gegenüber jener beim üblichen Schleifen um 90° verdreht, der Grat wird vorzugsweise entlang seiner Erstreckungsrichtung an der Glättfläche entlanggeführt, wobei die Bewegungsrichtung besonders bevorzugt (in Verbindung mit einem Band) parallel zur Längsrichtung des Bands liegt.

Damit wird bezogen auf die Breite des Bandes je Glättbewegung immer nur ein kleiner Bereich genutzt, sodass etwa in Verbindung mit der vorstehend beschriebenen "Schraubenform" auf dem Endlosband eine Vielzahl Glättflächen nebeneinander angeordnet werden können. Eine Flächenoptimierung hinsichtlich der Längsrichtung des Bandes kann wie vorstehend beschrieben durch ein Entlangstreifen in einem gekrümmten Bereich erreicht werden, weswegen die Glättbewegung besonders bevorzugt im Umlenkbereich des Endlosbands erfolgt, dort also, wo das Band, beispielsweise auf einer entsprechenden Rolle, konvex geführt ist (und von dieser Rolle etwa auch für die jeweils stückweise Bewegung angetrieben wird).

In bevorzugter Ausgestaltung ist eine Mehrzahl, idealerweise nebeneinander angeordneter Bänder vorgesehen und erfolgen nach der/den Glättbewegungen an einer Glättfläche des ersten Bandes eine/mehrere Glättbewegungen an einer Glättfläche des zweiten Bandes, und zwar mit einer ebenfalls begrenzten Relativgeschwindigkeit von höchstens 1 m/s. in dieser Reihenfolge zunehmend bevorzugt höchstens 0,9 m/s, 0,8 m/s, 0,7 m/s, 0,6 m/s, 0,5 m/s. Selbstverständlich kann auch noch ein drittes oder können noch weitere Bänder vorgesehen sein.

Vorzugsweise wird das Spritzgussteil dabei mit einem Roboterarm von Band zu Band bewegt und werden die Bänder bei in bevorzugter Ausgestaltung nebeneinander angeordneten Bändern selbst nicht seitlich bewegt. Bei dieser Ausführungsform können beispielsweise verschiedene Bänder, die sich etwa in ihrer Rauigkeit unterscheiden, vorgesehen werden, sodass beispielsweise zunächst ein gröberer Abtrag mit etwa rauem Schleifmittel erfolgt und die Oberfläche anschließend mit beispielsweise feinem Schleifmittel fein nachbearbeitet wird.

Generell hat sich auch eine Begrenzung des Kontaktdrucks zwischen Glättfläche und Spritzgussteil als vorteilhaft erwiesen, so liegt dieser vorzugsweise unter 100 N, weiter bevorzugt unter 80 N bzw. 60 N.

In dieser Hinsicht ist es auch vorteilhaft, wenn die Richtung der Glättbewegung mit der Vertikalen einen Winkel von nicht mehr als 10° einschließt, vorzugsweise parallel dazu ist, von gegebenenfalls in horizontaler Richtung zur Anpassung eines Kontaktdrucks erfolgenden Ausgleichsbewegungen abgesehen. So muss nämlich beispielsweise ein das Spritzgussteil führendes Haltewerkzeug nicht sein Eigengewicht gegenüber der Schwerkraft korrigieren, um einen entsprechend geringen Anpressdruck einzustellen. Anderenfalls könnte beispielsweise auch die Gefahr bestehen, dass etwa aufgrund von Vibrationen ein kurzzeitig höherer Anpressdruck aufgebracht und dementsprechend mehr Material abgetragen wird; wird senkrecht zur Schwerkraft gearbeitet, werden solche Vibrationen jedenfalls nicht durch die Schwerkraft verstärkt.

Als besonders für das erfindungsgemäße Verfahren geeignet hat sich eine Glättfläche erwiesen, die neben einer Mikrostruktur (Schleifpartikel) auch eine "Makrostruktur" aufweist; die Schleifpartikel sind in diese eingebettet, sodass auch bei einem beginnenden Abtrag der Makrostruktur immer neue Schleifpartikel freigelegt werden. Ein entsprechendes Schleifmittel ist unter der Bezeichnung trizact™ von 3M™ erhältlich, etwa mit einer Korngröße "A6". Hinsichtlich der vorliegenden Erfindung kann dessen Verwendung beispielsweise vorteilhaft sein, weil damit auch bei wiederholten Glättbewegungen (an etwa einem Spritzgussteil) keine Erhöhung des Anpressdrucks notwendig sein kann.

In bevorzugter Ausgestaltung wird mit dem erfindungsgemäßen Verfahren ein Spritzgussteil aus glasfaserverstärktem Kunststoff geglättet, insbesondere aus glasfaserverstärktem Polyarylamid. Für einen glasfaserverstärkten Kunststoff hat sich das Glätten als besonders vorteilhaft erwiesen, weil die hohe Geschwindigkeit beim konventionellen Schleifen die Gefahr eines Herausreißens der Fasern aus der Oberfläche erhöht, was etwa zu dementsprechend zerklüfteten Oberflächen führen kann.

Das mit dem erfindungsgemäßen Verfahren geglättete Spritzgussteil ist vorzugsweise für ein Kraftfahrzeug vorgesehen, und zwar insbesondere für den Innenraum eines Automobils, weil in diesem Anwendungsbereich die Anforderungen an die Oberflächenqualität der Bauteile besonders hoch sind. Mit Blick auf den im Zuge einer Verringerung des Kraftstoffverbrauchs vorangetriebenen Leichtbau kann das erfindungsgemäße Verfahren jedoch auch generell für ein für ein Automobil vorgesehenes Bauteil bevorzugt sein, weil etwa auch im Karosseriebereich die Anforderungen an die Oberflächenqualität hoch sind.

Die Erfindung richtet sich auch auf ein Verfahren zum Glätten der Oberflächen eines Satzes Spritzgussteile unterschiedlicher Bauart, die sich beispielsweise in ihren Abmessungen unterscheiden. Dabei wird ein jedes Spritzgussteil mit einem erfindungsgemäßen Verfahren geglättet, wobei sich die Verfahren im Kontaktdruck und / oder der Länge der Glättbewegung unterscheiden. Diese Parameter werden also vorzugsweise hinsichtlich der jeweiligen Bauart optimiert.

Ferner betrifft die Erfindung auch ein Verfahren zum Beschichten eines Spritzgussteils mit einer Metallschicht, vorzugsweise in einem Bad und insbesondere auch durch galvanische Abscheidung, bei welchem die Oberfläche des Spritzgussteils vor dem Beschichten erfindungsgemäß geglättet wird.

So kann etwa ein Kunststoffbauteil für den dekorativen Innenbereich eines Kraftfahrzeugs verchromt werden. Dazu kann das Kunststoffbauteil beispielsweise zunächst chemisch vorbehandelt werden, etwa durch eine Sulfonierung oder eine Beizung in Chromsäure. Im Anschluss an eine Bekeimung kann beispielsweise eine Nickelschicht zunächst chemisch, also außenstromlos, abgeschieden werden, die dann galvanisch verstärkt werden kann, etwa mit Nickel oder Kupfer. Anschließend kann das Bauteil beispielsweise galvanisch verchromt werden.

Die Erfinder haben festgestellt, dass ein erfindungsgemäßes Glätten in Verbindung mit einer anschließenden Metallbeschichtung besonders vorteilhaft ist, weil sich anderenfalls auch kleine Verunreinigungen an der Kunststoffoberfläche durch die nachfolgende Beschichtung verstärkt abzeichnen, also gewissermaßen "vergrößert" werden. Anfänglich mit dem bloßen Auge nicht sichtbare Verunreinigungen können so das Erscheinungsbild des fertigen Bauteils sichtlich beeinträchtigen, auch wegen der Lichtreflexe auf der Metallschicht.

Andererseits hat sich eine Beschichtung des zuvor erfindungsgemäß geglätteten Spritzgussteils auch als besonders vorteilhaft erwiesen, weil die Metallschicht minimale Unebenheiten, beispielsweise im Bereich von einigen Mikrometern, abzudecken und auch einzuebnen vermag, Durch das erfindungsgemäße Verfahren wird die Oberfläche also zwar so vorbereitet, dass "große" Verunreinigungen wie Aufschmelzungsausbrüche weitgehend vermieden werden, weil diese anderenfalls von der Metallschicht "vergrößert" würden; kleinere Oberflächenunreinheiten kann die Metallschicht jedoch ausgleichen, was im Ergebnis zu hoher Oberflächengüte führt. Insoweit ist eine Metallschicht, die auch aus mehreren Metallschichten zusammengesetzt sein kann, vorteilhaft, die eine Dicke von in dieser Reihenfolge zunehmend bevorzugt mindestens 5 µm, 10 µm, 15 µm, 20 µm, 25 µm, 30 µm, 35 µm, 40 µm hat.

Im Folgenden wird die Erfindung anhand eines Ausführungsbeispiels näher erläutert, wobei die einzelnen Merkmale auch in anderer Kombination erfindungswesentlich sein können und sich implizit, wie auch eingangs schon erwähnt, auf sämtliche Kategorien beziehen.

Im Einzelnen zeigt
- Figur 1: eine Vorrichtung zur Durchführung des erfindungsgemäßen Verfahrens in einer Seitenansicht;
- Figur 2: Bänder mit Glättflächen in Aufsicht;
- Figur 3: einen Vergleich von konventionell geschliffener und erfindungsgemäß geglätteter Spritzgussteiloberfläche nach der Beschichtung.

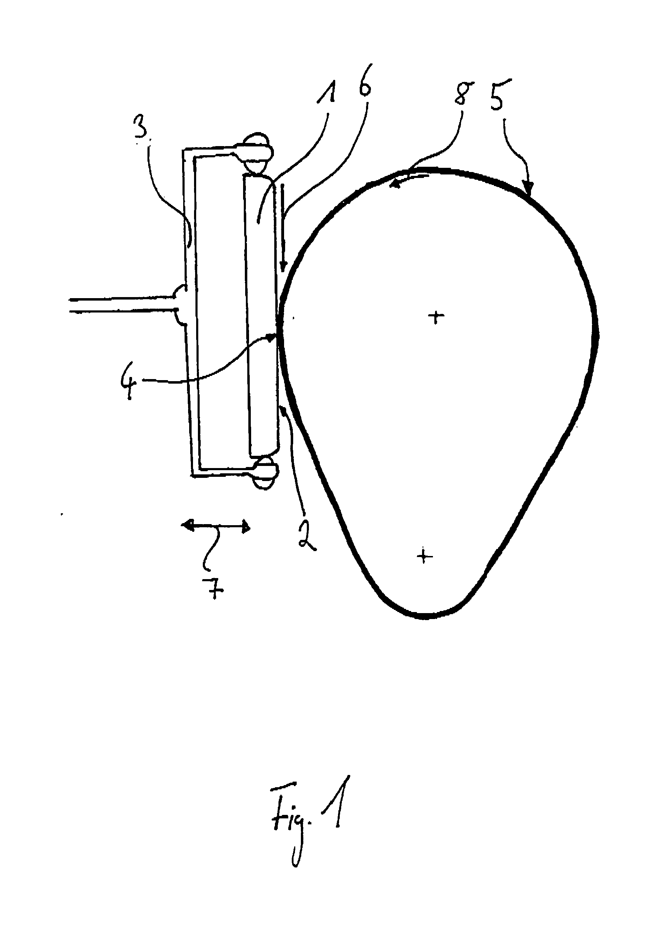

Figur 1 zeigt ein Spritzgussteil 1, und zwar eine Lamelle eines im Innenraum eines Kraftfahrzeugs vorgesehenen Lüftungsgitters. Hier hat sich eine Anwendung des erfindungsgemäßen Verfahrens als besonders vorteilhaft erwiesen, weil bei einer solchen Lamelle der Grat nicht so gelegt werden kann, dass er stets nicht sichtbar wäre.

Auch die in Figur 1 sichtbare Oberseite und die entgegengesetzte Unterseite können nämlich in Abhängigkeit von der Stellung des Lüftungsgitters für einen Fahrzeuginsassen sichtbar sein. Vorliegend verläuft der Grat 2 auch an einer dem Innenraum zugewandten Vorderseite der Lamelle.

Erfindungsgemäß wird nun das Spritzgussteil 1 mit einem computergesteuerten Haltewerkzeug 3 aufgenommen und in horizontaler Richtung an eine Glättfläche 4, die Teil eines Werkzeugs, nämlich eines Bandes 5 ist, herangeführt.

Sobald zwischen Spritzgussteil 1 und Glättfläche 4 ein Kontaktdruck von 50 N besteht, wird das Spritzgussteil 1 in vertikaler Richtung 6 an der Glättefläche 4 entlanggeführt, die dabei ihrerseits ruht. Das Spritzgussteil 1 wird dabei mit einer Geschwindigkeit von 0,4 m/s bewegt, sodass die Gefahr einer übermäßigen Erwärmung und damit des Entstehens von Aufschmelzungsausbrüchen weitgehend reduziert ist. Zu dem in Figur 1 skizzierten Zeitpunkt ist die Glättbewegung etwa zur Hälfte durchgeführt.

Im Anschluss an die Glättbewegung wird das Spritzgussteil 1 mittels des Haltewerkzeugs 3 wieder in horizontaler Richtung 7 von der Glättfläche 4 entfernt, sodass also der Kontakt zwischen Glättfläche 4 und Spritzgussteil 1 aufgehoben wird. Im Anschluss daran wird das Band ein Stück 8 weiterbewegt, womit einem nächsten Spritzgussteil eine neue Glättfläche zur Verfügung steht.

Da der Kontaktbereich zwischen Spritzgussteil 1 und Glattfläche 4 in einem Bereich des Bandes 5 liegt, in dem dieses eine Krümmung beschreibt, ist die je Spritzgussteil 1 benutzte Fläche entsprechend klein und können dementsprechend bezogen auf eine Umdrehung des Bandes 5 entsprechend viele Spritzgussteile geglättet werden.

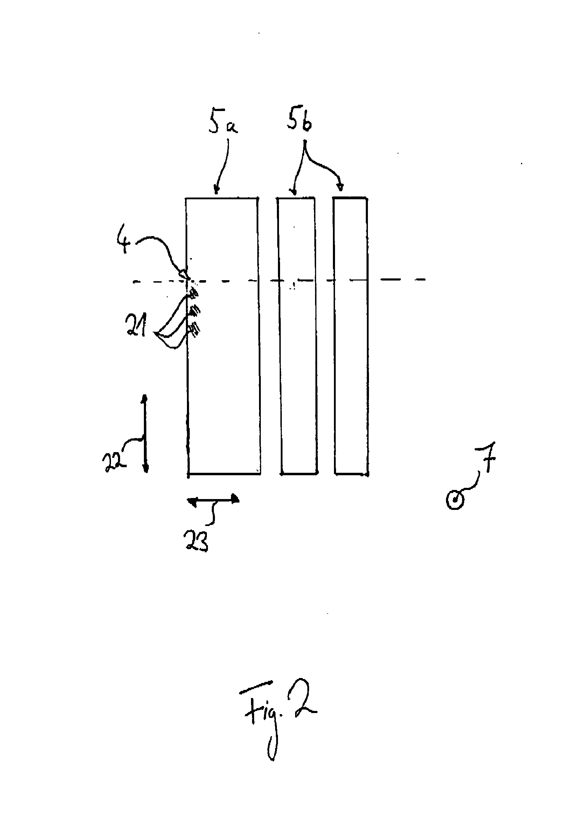

Figur 2 zeigt in Aufsicht, also in horizontaler Richtung 7 blickend, drei nebeneinander angeordnete Bänder 5a, b. Die Glättfläche 4 liegt im Bereich einer Krümmung der Bänder 5a, b, sodass je Spritzgussteil bezogen auf die Längsrichtung des Bandes 5a, b immer nur ein kleiner Flächenbereich benutzt wird. In der Figur sind auf dem Band 5a schematisch drei benutzte Flächenbereiche 21 eingezeichnet, die sich in der Längsrichtung 22 des Bandes 5a aneinanderreihen; nach einer vollständigen Umdrehung wird das dann folgende Spritzgussteil dazu in Breitenrichtung 23 versetzt (in der Figur nach rechts) mit dem Band 5a in Kontakt gebracht, sodass die benutzten Glättflächen 21 auf dem Band dann eine Schraubenform beschreiben.

Eine auch hinsichtlich der Breitenrichtung 23 optimale, also nahezu punktförmige Glättfläche 4 ergibt sich, weil der Grat 2 parallel zur Längsrichtung 22 des Bandes, tangential entlang der Krümmung geführt wird, vergleiche Figur 1.

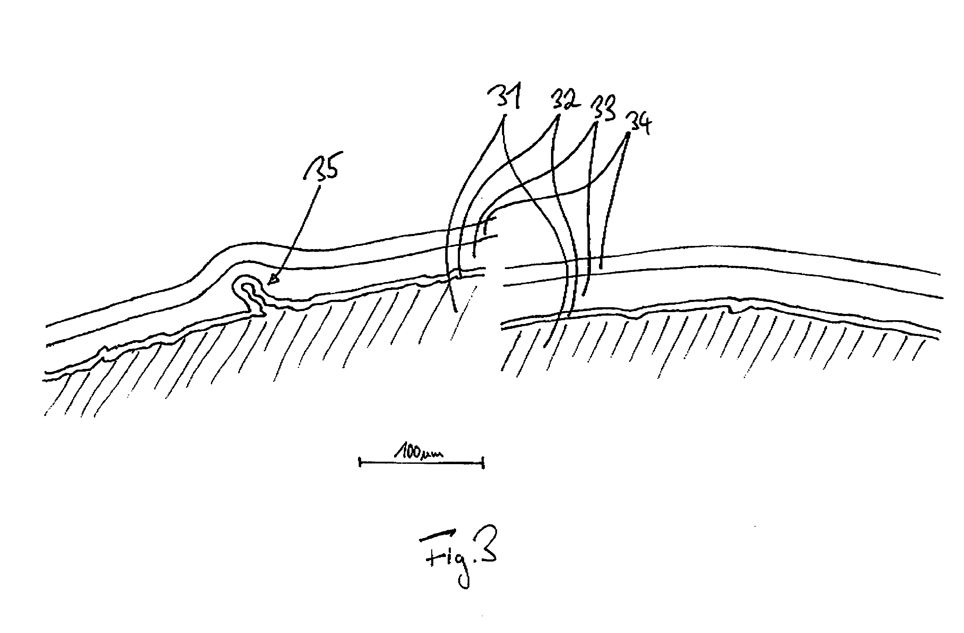

Figur 3 zeigt schematische Schliffbilder, und zwar eines Spritzgussteils mit vor dem Beschichten konventionell geschliffener Oberfläche (in der Figur links) und eines Spritzgussteils mit demgegenüber erfindungsgemäß geglätteter Oberfläche (in der Figur rechts). Der Schichtaufbau ist in beiden Fällen der gleiche, auf dem Kunststoffmaterial 31, glasfaserverstärktem Polyarylamid, ist jeweils zunächst (nach Vorbehandlung/Bekeimung) eine Nickelschicht 32 außenstromlos abgeschieden. Diese Nickelschicht 32 ist galvanisch verstärkt, und zwar durch eine Kupferschicht 33; auch die dekorative Chromschicht 34 ist galvanisch abgeschieden.

In dem Schliffbild des Spritzgussteils mit konventionell geschliffener Oberfläche ist ein Aufschmelzungsausbruch 35 zu erkennen, der sich durch das gesamte Schichtsystem "abdrückt". Wenn also gegebenenfalls der Aufschmelzungsausbruch 35 selbst mit einer Höhe von etwa 50 µm auf der Spritzgussteiloberfläche mit dem Auge nicht erkennbar ist, so entsteht doch nach der Beschichtung eine "vergrößerte" Verwerfung, weiche die Chromoberfläche sichtlich stört.

Diese Figur illustriert auch die besondere Wechselwirkung der erfindungsgemäßen Oberflächenglättung mit dem anschließenden chemischen und/oder galvanischen Beschichten in einem Bad, weil das Schichtsystem nämlich trotz der erfindungsgemäßen Vorkehrungen verbleibende Oberflächenunebenheiten "einebnet". Es werden also einerseits durch das Glätten solche Unebenheiten entfernt, die aufgrund der Beschichtung "vergrößert" und/oder aufgrund von Oberflächenreflexen sichtbar würden; andererseits ebnet das Schichtsystem demgegenüber deutlich kleinere Unebenheiten ein, sodass die Kombination von Glätten/Beschichten zu Oberflächen hoher Güte führt.

## Patentansprüche

1. Verfahren zum automatisierten Glätten einer Oberfläche eines Kunststoffspritzgussteils (1),
umfassend die Schritte:
- Vorsehen eines Werkzeugs (5) mit einer ersten Glättfläche (4);
- Halten des Kunststoffspritzgussteils (1) mit einem Haltewerkzeug;
- in Kontakt Bringen von erster Glättfläche (4) und Kunststoffspritzgussteil (1);
- in Kontaktlage gegeneinander Verschieben von erster Glättfläche (4) und Kunststoffspritzgussteil (1), und zwar mit einer Relativgeschwindigkeit von höchstens 1 m/s;
- Aufheben des Kontakts zwischen erster Glättfläche (4) und Kunststoffspritzgussteil (1).

2. Verfahren nach Anspruch 1, bei dem nach dem Aufheben des Kontakts zwischen erster Glättfläche (4) und Kunststoffspritzgusstell (1) zumindest eines von eine neue Glättfläche (4) für ein nachfolgend zu glättendes Kunststoffspritzgusstell (1) zur Verfügung gestellt und die erste Glättfläche (4) abgeblasen wird.

3. Verfahren nach Anspruch 1 oder 2, bei dem die erste Glättfläche (4) und das Kunststoffspritzgussteil (1) in Kontaktlage gegeneinander verschoben werden, indem das Kunststoffspritzgussteil (1) an der ersten Glättfläche (4) entlang bewegt wird, die dabei ihrerseits zumindest zeitweise selbst nicht bewegt wird.

4. Verfahren nach Anspruch 3, bei welchem das Kunststoffspritzgussteil (1) nach einer ersten Bewegung entlang der zumindest zeitweise selbst nicht bewegten ersten Glättfläche (4) erneut entlang einer zumindest zeitweise selbst nicht bewegten Glättfläche (4) bewegt wird.

5. Verfahren nach einem der vorstehenden Ansprüche, bei dem die erste Glättfläche (4) gekrümmt ist und erste Glättfläche (4) und Kunststoffspritzgussteil (1) im Bereich dieser Krümmung in Kontakt gebracht werden.

6. Verfahren nach Anspruch 2, auch in Verbindung mit einem weiteren der vorstehenden Ansprüche, bei dem die erste und eine neue Glättfläche (4) auf einem ersten Band (5) vorgesehen sind und das Bereitstellen der neuen Glättfläche (4) durch eine Bandbewegung erfolgt.

7. Verfahren nach Anspruch 6, bei dem die erste und die neue Glättfläche (4) auf einem ersten Endlosband (5) gemeinsam mit einer Vielzahl weiterer Glättflächen (4) vorgesehen sind, wobei eine die Glättflächen (4) in der Reihenfolge ihrer Bereitstellung verbindende Linie auf dem ersten Endlosband (5) eine Art Schraubenform beschreibt.

8. Verfahren nach Anspruch 6 oder 7, bei welchem ein zweites Band (5b) mit weiteren Glättflächen (4) vorgesehen ist und das Kunststoffspritzgussteil (1) nach dem Aufheben des Kontakts zu der ersten Glättfläche (4) des ersten Bandes (5a) mit einer Glättfläche (4) des zweiten Bandes (5b) in Kontakt gebracht wird, wobei anschließend auch die Glättfläche (4) des zweiten Bandes (5b) und das Kunststoffspritzgussteil (1) in Kontaktlage mit einer Relativgeschwindigkeit von höchstens 1 m/s gegeneinander verschoben werden.

9. Verfahren nach einem der vorstehenden Ansprüche, mit dem ein sich entlang der Oberfläche des Kunststoffspritzgussteils (1) erstreckender Grat (2) geglättet wird, wobei die Erstreckungsrichtung des Grats (2) mit der Richtung (6) der Relativverschiebung einen Winkel von höchstens 45° einschließt, vorzugsweise parallel dazu ist.

10. Verfahren nach einem der vorstehenden Ansprüche, bei welchem ein Kontaktdruck zwischen erster Glättfläche (4) und Kunststoffspritzgussteil (1) während der Relativverschiebung einen Wert von 100 N nicht überschreitet.

11. Verfahren nach einem der vorstehenden Ansprüche, bei welchem die Relativverschiebung von erster Glättfläche (4) und Kunststoffspritzgussteil (1) in einer Bewegungsrichtung (6) erfolgt, die mit der Vertikalen eines Winkel von nicht mehr als 10° einschließt, von einer gegebenenfalls in horizontaler Richtung zur Anpassung eines Kontaktdrucks zwischen erster Glättfläche (4) und Kunststoffspritzgussteil (1) erfolgenden Ausgleichsbewegung abgesehen.

12. Verfahren nach einem der vorstehenden Ansprüche, bei welchem als Glättfläche (4) eine Oberfläche mit darin eingebetteten Schleifpartikeln vorgesehen ist, wobei die Oberfläche zusätzlich eine periodische Makrostruktur aufweist und sich diese Makrostruktur senkrecht zur Flächenrichtung um ein Vielfaches des mittleren Schleifpartikeldurchmessers erhebt.

13. Verfahren nach einem der vorstehenden Ansprüche, bei welchem das Kunststoffspritzgussteil (1) zumindest eines von aus einem glasfaserverstärkten Kunststoff besteht und für ein Kraftfahrzeug, insbesondere für den Innenraum eines Automobils, vorgesehen ist.

14. Verfahren zum automatisierten Glätten der Oberflächen eines Satzes Kunststoffspritzgussteile (1) unterschiedlicher Bauart, bei welchem ein jedes Kunststoffspritzgussteil (1) mit einem Verfahren nach einem der vorstehenden Ansprüche geglättet wird, wobei sich die Verfahren zum Glätten der Kunststoffspritzgussteile (1) unterschiedlicher Bauart in zumindest einem von einem Kontaktdruck zwischen erster Glättfläche (4) und Kunststoffspritzgussteil (1) während der Relativverschiebung und einer Länge der Relativverschiebung unterscheiden.

15. Verfahren zum Beschichten eines Kunststoffspritzgussteils (1) mit einer Metallschicht in einem Bad, bei welchem die Oberfläche des Kunststoffspritrgussteils (1) vor dem Beschichten mit einem Verfahren nach einem der vorstehenden Ansprüche geglättet wird.
